# EUROPEAN PATENT APPLICATION

(11) **EP 4 841 314 A1**
(43) Date of publication of application: **18.11.2026**
(21) Application number: 25305689.9
(22) Date of filing: 14.05.2025
(51) Int. Cl.: G02B 1/115, G02B 27/01, G02C 7/10

(54) **OPTICAL ARTICLE HAVING A NEUTRAL TRANSMISSION AND A MASKING EFFECT BY REFLECTION AT HIGH INCIDENCE ANGLE, EYEPIECE, HEAD-MOUNTABLE SYSTEM AND EYEWEAR SYSTEM COMPRISING SUCH OPTICAL ARTICLE**

(71) Applicant: Essilor International, 94220 Charenton-Le-Pont (FR)
(72) Inventor: REDON, Justine, 94600 CHOISY-LE-ROI (FR); JOUSSELIN, Caroline, 64210 LA VARENNE St-HILAIRE (FR); GUILLOU, Hélène, 94880 NOISEAU (FR)
(74) Representative: Jacobacci & Partners France

(57) **Abstract**

The invention concerns an optical article (2) comprising a front surface adapted to receive incident optical beams, wherein the front surface (16) comprises a multilayer interference coating (14) having a total thickness lower than or equal to 450 nm and providing a mean visible light reflection factor Rv lower than or equal to 2.5% for incident optical beams on the front surface over a range of angle of incidence from 0° to 15°, and the mean visible light reflection factor being higher than or equal to 7.1% for incident optical beams on the front surface at an angle of incidence equal to 45° with respect to a perpendicular to said front surface.

## Description

### TECHNICAL FIELD OF THE INVENTION

The invention relates to an optical article with a coating providing a masking function at high angle of incidence in reflection while maintaining a high neutral transmission.

In particular, the invention finds application in a head-mounted systems such as a smart eyewear product for augmented reality.

### BACKGROUND INFORMATION AND PRIOR ART

In the present disclosure, a smart eyewear for augmented reality is an eyewear that can be activated to display images that are superimposed on the background field of view of the user. For example, some smart eyewear comprise a waveguide arranged on a part of an optical lens and a projector that is configured to generate and project an image on the waveguide.

Augmented reality eyewear systems have a projector and an optical device comprising a waveguide configured to transmit light emitted by the projector to a field of view of a wearer of the augmented reality eyewear system.

The field of view of the wearer is here defined by the augmented reality eyewear system and can be called 'eye box'.

In particular, the projector is configured to project a virtual image which is combined with a real image from a wearer's environment which remains visible through the augmented reality eyewear system.

In other words, through the eye box, the wearer is able to see both the virtual image coming from the projector thanks to the waveguide and the real image coming from the environment, the two images being combined so as to see the result of a superimposition image of the wearer's real environment and a virtual environment. The waveguide may be of the reflective type and may comprise an optical structure configured to guide light by total internal reflection. The optical structure may have multiple partially reflective surfaces arranged so as to enable the injection, propagation, and redirection of light beams from the projector, inside the waveguide and towards the eye box.

For instance, such reflective waveguide may comprise a plurality of spaced apart reflective facets arranged in series in a first direction and each extending in a second direction transverse to the first direction.

Some reflective facets may act as out-coupling facets and are oriented and dimensioned to redirect the light beam out of the waveguide toward the eye box.

In addition, the reflective facets configured to transmit light emitted by the projector also transmit light that is incoming from the wearer's environment towards the eyebox, that is light directed from a front face of the waveguide towards a back face of the waveguide.

In this respect, it is considered that the reflective facets may thus transmit stray light which, under certain conditions, could create visual discomfort.

Patent application WO2018154576 discloses an apparatus comprising a lightguide and a set of three optical components associated with the at least one lightguide. The set includes a pair of first and second matching diffractive optical components and a reflective optical component including a sequence of a plurality of partially reflective, mutually parallel surfaces. The components cooperate for expanding coupled-in light, that is coupled into the lightguide, to coupled-out light.

The reflective optical component of the set is implemented by a sequence of a plurality of partially reflecting surfaces, referred to as facets.

The facets are arranged in series in a first direction and are spaced apart from each other, and extend in a second direction that is transverse to the first direction.

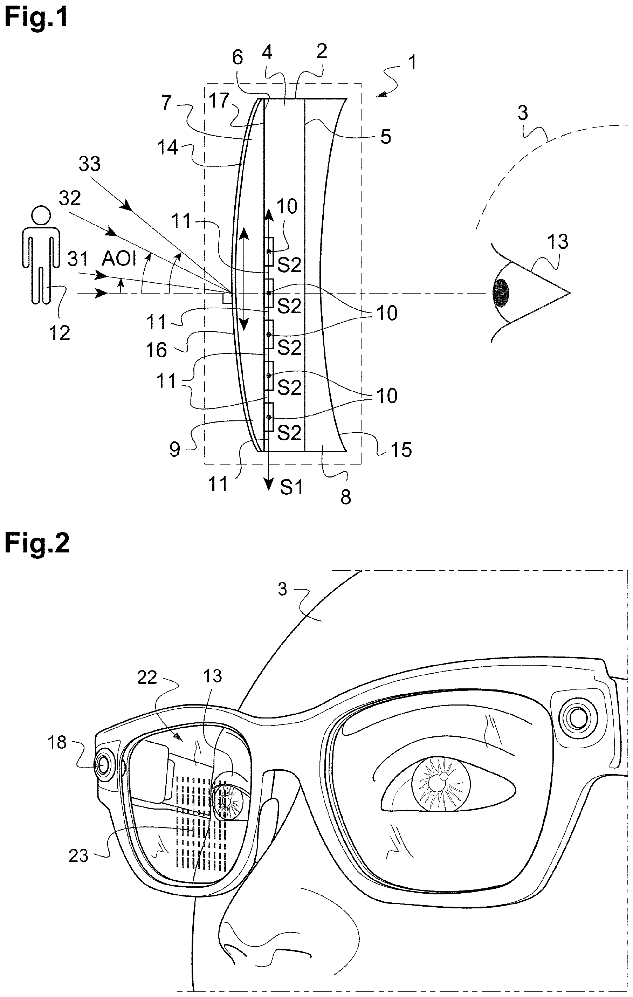

In smart eyewear worn by a wearer, some non-esthetic effects are only visible by an external observer at higher incidence angles. For example, as illustrated in figure 2, when the projector 18 of the smart eyewear 22 is activated, it generates a deformed image 23 of the image emitted by the projector that is visible for external observers. This image is visible 23 at a specific incidence angle around 45-50°. This deformed image 23 is visible in overlay on a part of the surface of the eyewear 22. The deformed image 23 typically shows dark lines and bright stripes. From an observer's point of view, such a deformed image hinders looking at the eye 13 and/or the face of the wearer 3.

Some eyewear have a mirror coating providing a masking effect by reflection. However, the high reflection coefficient of such a mirror coating causes a loss of transmission and generates stray light and hinders even more looking at the eye 13 and/or the face of the wearer.

Other eyewear also have a masking effect by absorption, such as tinted lenses, solar, polar or photochromic lenses. However, the absorption also causes a loss of mean visible light transmission factor Tv which may be detrimental to the visual acuity and visual comfort and also hinders even more looking at the eye 13 and/or the face of the wearer.

There is a need for an eyewear that masks the non-esthetic effects in reflection while maintaining good transmission around normal incidence for vision clarity.

### SUMMARY OF THE INVENTION

The present disclosure is directed to an optical article comprising a front surface adapted to receive incident optical beams and a back surface through which transmitted optical beams exit to reach an eye of an individual, wherein the front surface comprises a multilayer interference coating comprising a stack of dielectric layers, the multilayer interference coating providing the optical article with a mean visible light reflection factor Rv that is a function of an angle of incidence (AOI) of each optical beam on the front surface.

According to the present disclosure, the optical article is designed such that the multilayer interference coating has a total thickness lower than or equal to 450 nm, the mean visible light reflection factor Rv being lower than or equal to 2.5% for incident optical beams on the front surface over a range of angle of incidence with respect to a perpendicular to said front surface higher than or equal to 0 degree and lower than or equal to 15 degrees, and the mean visible light reflection factor being higher than or equal to 7.1 % for incident optical beams on the front surface at an angle of incidence equal to 45 degrees with respect to a perpendicular to said front surface.

This multilayer interference coating provides the optical article simultaneously with antireflective property at low angle of incidence and with masking property at 45 deg. angle of incidence, without hindering looking at the eye and/or the face of the wearer.

According to a particular aspect, the multilayer interference coating has in transmission a color coordinate value b* in CIELAB color space higher than or equal to - 4, more preferably higher than or equal to - 3, even more preferably higher than or equal to - 2, even more higher than or equal to - 1, over a range of angle of incidence lower than or equal to 30 degrees, more preferably lower than or equal to 45 degrees. This multilayer interference coating provides in addition a clear and neutral transmission over a range of angle of incidence at least from 0 to 30deg.

According to a particular aspect, the multilayer interference coating has in reflection a hue angle derived from the CIELAB color space for incident optical beams at an angle of incidence of 0 degree and, respectively of 45 degrees, with respect to a perpendicular to said multilayer interference coating, and a difference between the hue angle at the angle of incidence of 45 degrees and the hue angle at the angle of incidence of 0 degree is lower than or equal to 35 in absolute value.

According to another aspect, the color coordinate value b* of the transmission of the multilayer interference coating is higher than or equal to - 4 for incident optical beams at an angle of incidence lower than or equal to 50 degrees with respect to a perpendicular to said multilayer interference coating.

According to still another aspect, a ratio between the mean visible light reflection factor Rv at the angle of incidence of 45 degrees and the mean visible light reflection factor Rv at the angle of incidence of 15 degrees (Rv(45°)/Rv(15°)) is higher than or equal to 2.80.

Advantageously, the multilayer interference coating comprises at least one layer of high refractive index material having a refractive index higher than 1.55 in the visible range and at least one layer of low refractive index material having a refractive index of 1.55 or less in the visible range, each layer of the multilayer interference coating having a thickness lower than or equal to 250 nm, more preferably lower than or equal to 150 nm.

According to a particular aspect, in this case, each layer of the at least one layer of high refractive index material having a refractive index higher than 1.55 in the visible range has a thickness lower than or equal to 150 nm, more preferably lower than 120 nm, even more preferably lower than 110 nm.

According to an other particular aspect, in this case, each layer of the at least one layer of low refractive index material having a refractive index of 1.55 or less in the visible range has a thickness lower than or equal to 150 nm, more preferably lower than 140 nm, even more preferably lower than 90 nm.

Advantageously, wherein said multilayer interference coating comprises less than 13 layers, more preferably less than 10 layers, even more preferably less than or equal to 9 layers of layer of high refractive index material having a refractive index higher than 1.55 in the visible range and layer of low refractive index material having a refractive index of 1.55 or less in the visible range.

According to a first category of examples, said multilayer interference coating comprises layers of different materials from an innermost layer to an outermost layer: a layer of zirconium dioxide having a thickness of 10 nm to 20 nm; a layer of silicon dioxide having a thickness of 10-20 nm; a layer of zirconium dioxide having a thickness of 60-80 nm; a layer of silicon dioxide having a thickness of 10-20 nm; a layer of zirconium dioxide having a thickness of 5-20 nm; a layer of silicon dioxide having a thickness of 100-200 nm; a layer of zirconium dioxide having a thickness of 10-20 nm.

According to a second category of examples, said multilayer interference coating comprises layers of different materials from an innermost layer to an outermost layer: a layer of tantalum pentoxide having a thickness of 5-20 nm; a layer of silicon dioxide having a thickness of 5-20 nm; a layer of tantalum pentoxide having a thickness of 80-120 nm; a layer of silicon dioxide having a thickness of 40-80 nm; a layer of tantalum pentoxide having a thickness of 5-20 nm; a layer of silicon dioxide having a thickness of 50-100 nm; a layer of tantalum pentoxide having a thickness of 20-50 nm.

The present disclosure is also directed to an eyepiece or optical device configured to equip a head-mounted system such as an augmented reality eyewear system and to a head-mountable system such as an augmented reality eyewear system comprising such eyepiece, that are simple and convenient to use and to manufacture.

The present disclosure accordingly provides an eyepiece, comprising a waveguide, more preferably having spaced apart reflective facets arranged in series in a first direction and extending in a second direction that is transverse to the first direction, the waveguide having a front face and a back face opposite to the front face, the eyepiece further comprising an optical article having a front surface and a back surface opposite to said front surface, the front face of the waveguide being arranged on a part of the back surface of the optical article, wherein the front surface of the optical article comprises a multilayer interference coating comprising a stack of dielectric layers, the multilayer interference coating providing the optical article with a mean visible light reflection factor Rv that is a function of an angle of incidence (AOI) of each optical beam on the front surface, said optical article being designed such that: the multilayer interference coating has a total thickness lower than or equal to 450 nm; the mean visible light reflection factor Rv being lower than or equal to 2.5% for incident optical beams on the front surface of the optical article over a range of angle of incidence with respect to a perpendicular to said front surface higher than or equal to 0 degrees and lower than or equal to 15 degrees, the mean visible light reflection factor being higher than or equal to 7.1% for incident optical beams on the front surface of the optical article at an angle of incidence equal to 45 degrees with respect to a perpendicular to said front surface.

According to another aspect, said multilayer interference coating has in transmission a color coordinate value b* in CIELAB color space higher than or equal to - 4, more preferably higher than or equal to - 3, even more preferably higher than or equal to - 2, even more higher than or equal to - 1, over a range of angle of incidence lower than or equal to 30 degrees, more preferably lower than or equal to 45 degrees.

According to yet another aspect, the eyepiece further comprises a waveguide having spaced apart reflective facets arranged in series in a first direction and extending in a second direction that is transverse to the first direction, the waveguide having a front face and a back face opposite to the front face

The above allows, at least from the observer's point of view, that is from a front face side, to hide any unwanted optic patterns, such as dark lines or stripes around the wearer's eyes that occurs in prior art eyepiece because of the presence of the waveguide, thus resulting according to the invention, in a homogenous appearance, in addition to improve, or at least without hindering, the vision of the wearer of both a projected virtual image that is projected by the augmented reality eyewear system through the waveguide, and real image of the environment.

Therefore, the eyepiece of the present disclosure can equip a head-mountable system encompassing any type of device designed to be worn over/in at least one eye of a user in any suitable form factor.

With this respect, the present disclosure also provides a head-mountable system, more preferably an augmented reality eyewear system configured to be worn by a wearer, the head-mountable system comprising a projector configured to project a virtual image and an eyepiece comprising a waveguide, the waveguide being configured to transmit projected light emitted by the projector to a field of view of a wearer, the eyepiece further comprising an optical article having a front surface and a back surface opposite to said front surface, the front face of the waveguide being arranged on a part of the back surface of the optical article, wherein the front surface of the optical article comprises a multilayer interference coating comprising a stack of dielectric layers, the multilayer interference coating providing the optical article with a mean visible light reflection factor Rv that is a function of an angle of incidence of each optical beam on the front surface, said optical article being designed such that the multilayer interference coating has a total thickness lower than or equal to 450 nm, the mean visible light reflection factor Rv being lower than or equal to 2.5% for incident optical beams on the front surface of the optical article over a range of angle of incidence with respect to a perpendicular to said front surface higher than or equal to 0 degrees and lower than or equal to 15 degrees, the mean visible light reflection factor being higher than or equal to 7.1% for incident optical beams on the front surface of the optical article at an angle of incidence equal to 45 degrees with respect to a perpendicular to said front surface, said eyepiece being configured to display projected light emitted by the projector and transmitted by the waveguide to a field of view of the wearer.

According to another aspect of the invention, the multilayer interference coating having in transmission a color coordinate value b* in CIELAB color space higher than or equal to - 4, more preferably higher than or equal to - 3, even more preferably higher than or equal to - 2, even more higher than or equal to - 1, over a range of angle of incidence lower than or equal to 30 degrees, more preferably lower than or equal to 45 degrees.

For example, the head-mountable system, preferably the eyewear system and more preferably the augmented reality eyewear system may be formed by spectacle lenses, more preferably ophthalmic lenses, or by a helmet comprising a visor, or by a facial mask.

Advantageous and convenient features of the optical device and also the eyepiece and the head-mountable system are described below.

The optical article comprised in the above mentioned eyepiece, in the above mentioned head mountable system, or in the above mentioned eyewearsystem, can have any one of the above mentioned features and properties in relation to the optical article according to the invention, considered alone or in combination.

### DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 schematically shows a side view of an augmented reality eyewear system including an optical device with a multilayer interference coating according to the present disclosure and light beams incident on the front face at various incidence angles ;
- Figure 2 shows an external view at high angle of incidence of an augmented reality eyewear system without the multilayer interference coating ;
- Figure 3 schematically shows a top view of a wearer equipped with an augmented reality eyewear system according to the present disclosure and the corresponding field of view of the wearer ;
- Figure 4 is a graph with three reflectance curves as a function of the wavelength for the first exemplary multilayer interference coating under an angle of incidence of 15 degrees (plain line), 35 deg. (dashed line) and 45 deg. (dashed-dotted line) ;
- Figure 5 is an image of various lenses with different coatings, placed on a clear background, and as seen in reflection and transmission at higher angle of incidence ;

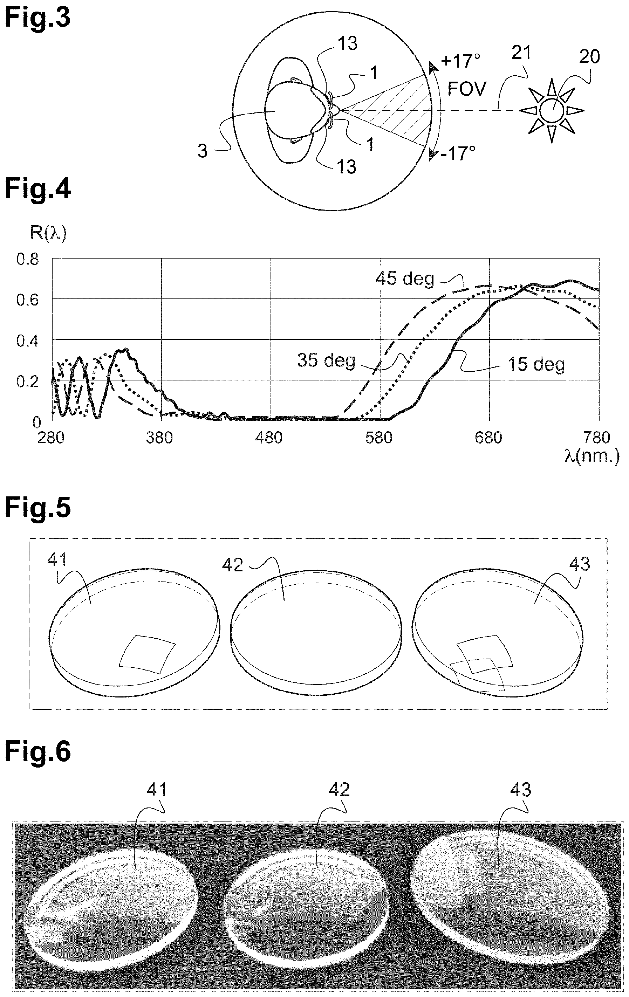

- Figure 6 is an image of the same lenses as in figure 5, placed on a dark background, and as seen in reflection and transmission at higher angle of incidence. In the description which follows the drawings are not necessary to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features that are defined relative to a device can be transposed, individually or in combination, to a process.

### A) Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

Also, unless otherwise indicated, the indication of an interval of values « from X to Y » or "between X to Y", according to the present invention, means as including the values of X and Y.

We mean an ophthalmic article defined by, but not exclusive of corrective lenses, non-corrective lenses, contact lenses, intra-ocular lenses, magnifying lenses, protective lenses, and visors containing photochromic compounds within a coating, the lens material, a film, or any adjacent layer.

As used herein, "a base element" can consist in an optical, such as an ophthalmic, substrate or in a support film of optical quality to be fixed on an optical/ophthalmic substrate thanks to an adhesive such as a pressure-sensitive adhesive of optical quality (PSA layer) (i.e.: laminate). In the present application, when an optical lens comprises one or more coatings onto the surface thereof, the expression "to deposit a layer or a coating onto the article" is intended to mean that a layer or a coating is deposited onto the external (exposed) surface of the outer coating of the article, that is to say its coating that is the most distant from the substrate.

As used herein, "multilayer interference coating", or IC hereinafter, means a coating, generally composed of thin layers and comprises at least one layer having a low refractive index which is lower than 1.55, defined as "LI layer", and at least one layer having a high refractive index which is equal to or higher than 1.55, defined as "HI layer".

In the present application, when an optical lens comprises one or more coatings onto the surface thereof, the expression "to deposit a layer, a sheet or a coating onto the article" is intended to mean that a layer, a sheet or a coating is deposited onto the external (exposed) surface of the outer coating of the article, that is to say its coating that is the most distant from the substrate.

Unless otherwise indicated, a coating, a layer or a sheet, that is said to be "on" a substrate/base element or deposited "onto" a substrate/base element" is defined as a coating, a layer or a sheet, which (i) is positioned above the substrate/base element, (ii) is not necessarily in contact with the substrate/base element, that is to say one or more intermediate coatings/sheets may be arranged between the substrate/base element and the coating or sheet in question, and (iii) does not necessarily completely cover the substrate/base element.

In a preferred embodiment, the coating on a substrate/base element or deposited onto a substrate/base element is in direct contact with this substrate.

**When "a layer** A/sheet A is lying under a layer B/sheet B", it is intended to mean that layer B/sheet B is more distant from the substrate than layer A/sheet A respectively.

By outermost layer or sheet of the multilayer interference coating, it is meant the layer or sheet of the multilayer interference coating which is the furthest from the substrate.

By innermost layer or sheet of the multilayer interference coating, it is meant the layer or sheet of the multilayer interference coating which is the closest to the substrate.

By inner layer/sheet of the multilayer interference coating, it is meant any layer/sheet of the multilayer interference coating except for the outermost layer/sheet of said multilayer interference coating.

Also, unless stated otherwise, all thicknesses disclosed in the present application relate to physical thicknesses.

As used herein, a layer of the multilayer interference coating is defined as having a thickness higher than or equal to 1 nm. Thus, any layer having a thickness lower than 1 nm will not be considered when counting the number of layers in the reflective coating. A sub-layer (having generally a physical thickness of 150 nm) is also not considered when counting the number of layers of the multilayer interference coating.

Unless otherwise specified, the refractive indices referred to in the present application are expressed at 25°C at a wavelength of 550 nm.

As used herein, the rear (or the inner or Concave or CC) face or rear surface of the base element/substrate is intended to mean the face or surface which, when using the article, is the nearest from the wearer's eye. It is generally a concave surface. On the contrary, the front face or front surface of the substrate/base element (or Convex or CX), is the face or surface which, when using the article, is the most distant from the wearer's eye. It is generally a convex surface.

Also, as used herein, a "transparent substrate/base element" is understood to be transparent, when the observation of an image through said substrate is perceived with no significant loss of contrast, that is, when the formation of an image through said substrate is obtained without adversely affecting the quality of the image.

The colorimetric coefficients of the optical article of the invention in the international colorimetric system CIE L*a*b* (1976) (such as the Chroma C* and the hue "h") are calculated between 380 and 780 nm, taking the standard illuminant D 65 and the observer into account (angle of 10°). The observer is a "standard observer" as defined in the international colorimetric system CIE L*a*b*. Indeed, in the CIE L*a*b* space, it is possible to express not only overall variations in color, but also in relation to one or more of the parameters L*, a* and b*. This can be used to define new parameters and to relate them to the attributes of the visual sensation. Clarity, related to luminosity, is directly represented by the value of L*. Chroma: C* = (a*² + b*² )^{1/2} defines the chromaticness. The angle of hue or hue angle : h = tg⁻¹ (b*/a*) (expressed in degrees); related to hue.

The optical characteristics comprise at least the mean light reflection factor in the visible region Rᵥ, also named the "luminous reflectance".

The mean visible light reflection factor Rᵥ corresponds to the reflection coefficient integrated over the visible spectrum between 380 nm and 780 nm and weighted by the curve of energy sensitivity of the human eye for a CIE observer over the visible spectrum between 380 nm et 780 nm with a daylight illuminant. More precisely, the mean visible light reflection factor Rᵥ is defined as follows: ${R}_{v} = \frac{{\int }_{380}^{780} R \left(λ\right) V \left(λ\right) {D}_{65} \left(λ\right) dλ}{{\int }_{380}^{780} V \left(λ\right) {D}_{65} \left(λ\right) dλ}$ where R(λ) is the reflectance at a wavelength λ between 380 nm and 780 nm, V(λ) is the eye sensitivity function for a photopic observer in the color space defined by the CIE (Commission on Illumination, in French "Commission Internationale de I'Eclairage") in 1931 and D65(λ) is the daylight illuminant defined in the CIE S005/E-1998 standard.

The illuminant can be adapted according to the light situation. For instance, a derived Rv function may be defined for indoor light situations using LED illuminant rather than the usual D65.

According to the present disclosure, the optical and colorimetric measurements (in reflection) of the front face coated with the multilayer interference coating mean reflection factors Rv, hue angle h, and chroma C* in the international colorimetric CIE (L*, a*, b*) space were carried out with a spectrophotometer, taking into account the standard illuminant D65, and the standard observer 10° (for h and C*). They are provided for an angle of incidence of 15°, 35° or 45 degrees. At 0°, the optical measurements in reflection were either provided thanks to theoretical simulation or deduced from transmission measurements.

According to the present disclosure, the "angle of incidence (denoted AOI), is the angle formed by a light ray incident on an ophthalmic lens surface and a normal to the surface at the point of incidence. The light ray is for instance an illuminant light source, such as the standard illuminant D65 as defined in the international colorimetric CIE L*a*b* (1976). Generally, the angle of incidence may be in the range from 0° (normal incidence) to 90° (grazing incidence). The usual range for angle of incidence is from 0° to 75° and is typically of 0°, 15°, 35° or 45° or above for the present disclosure.

According to the present disclosure, when the mean light reflection factor in the visible region Rv onto the front surface of the optical article is equal to or lower than 2.5% over a range of angle of incidence, this means that the multilayer interference coating is able to provide an antireflective behavior onto the front surface of the optical article at least over this range of angle of incidence.

The mean visible light transmittance, denoted Tᵥ, represents the transmission coefficient over the visible spectrum between 380 nm and 780 nm. When the optical article has no absorption, the total of transmission plus reflection always is 100% or, in other words, Tᵥ = 100% - Rᵥ.

In general, the multilayer interference coating used in the present disclosure involves dielectric layers having small thicknesses, and the absorption of the multilayer interference coating is almost zero. Thus, values in transmittance are easily deduced from values in reflection. However, in some applications, the optical article comprises a tinted substrate or a tinted layer having a determined absorption. In this case, the sum of reflection and transmittance is not 100% due to this absorption. In the present application, the absorption of the optical article is assumed to be uniform across the surface area of said optical article.

### B) Head-mountable system according to the present disclosure

Figure 1 schematically shows a side view of an example of a head-mountable system, more particularly of an augmented reality eyewear system 1. A head-mountable system encompasses any type of system or device designed to be worn over/in at least one eye of a user in any suitable form factor.

It includes head-mounted display systems (eg near eye display device, augmented reality systems, virtual reality systems and/or mixed reality systems), helmet, headset, eyewear smart systems or eyewear devices or systems (eg eyeglasses, googles, masks, visors, clip-on, contact lens, intraocular implant).

The augmented reality eyewear system 1 is one of spectacle lenses, a helmet comprising a visor integrating the ophthalmic device, or a facial mask.

The augmented reality eyewear system 1 comprises an ophthalmic device 2 also hereafter optical device 2.

In the present disclosure, the ophthalmic device 2 comprises a waveguide 4 having a back face 5 intended to be placed on a wearer side, and a front face 6 opposite to the back face 5, and intended to be placed on an observer side (external environment).

The ophthalmic device 2 further comprises a back lens substrate 8, and a front lens substrate 9. The back lens substrate 8 defines a back surface 15 of the ophthalmic device 2, and this back surface 15 is concave.

The front lens substrate 9 defines a front surface 16 of the ophthalmic device 2, that is opposite to the back surface 15, and that is convex.

The waveguide 4 is arranged between the back surface 15 and the front surface 16.

The back lens substrate 8 may carry an ophthalmic prescription defining a first optical function. The first optical function can be corrective or not corrective. Similarly, the front lens may carry an ophthalmic prescription, and both back and front lens may carry an ophthalmic prescription.

The back lens substrate 8 is here distinct from the waveguide 4, the waveguide 4 being sandwiched between the back lens substrate 8 and the front lens substrate 9.

In alternative, the back lens substrate and the waveguide may form a single piece.

The augmented reality eyewear system 1, and thus the ophthalmic device 2, has a conventional wearing position in which an eye 13 of the wearer 3 of the ophthalmic device 2 faces the back face 5 of the waveguide 4 and is opposite to the front face 6 of the waveguide 4.

The augmented reality eyewear system 1 comprises a projector (not shown) and the waveguide 4 is configured to transmit light emitted by the projector to a field of view of the wearer 3 of the augmented reality eyewear system. The field of view of the wearer 3 is here defined by the augmented reality eyewear system 1 and can be called 'eye box'.

The waveguide 4 allows to superimpose information, generally computer-generated information, over the real image from a wearer's environment which remains visible through the ophthalmic device 2 of the augmented reality eyewear system 1. Thus, the image of the surrounding world of the wearer 3 is augmented with overlaying information.

The augmented reality eyewear system 1 may also comprise a collimating source (not shown) arranged between the projector and the waveguide 4 and which allows to couple the light emitted by the projector in the waveguide 4.

The waveguide 4 is a light conducting element that can be a so-called light-guide optical element (LOE).

Accordingly, the waveguide 4 comprises spaced apart reflective facets 10 which are arranged in series in a first direction S1, and extending in a second direction S2 that is transverse to the first direction S1.

In the illustrated example, the second direction S2 is orthogonal to the first direction S1.

However, more generally, the second direction S2 may be any direction that is angled with respect to the first direction S1.

In particular, the reflective facets 10 may be out-coupling facets that are configured to reflect light from an inside of the waveguide 4 to an outside of the waveguide 4, through the back face 5.

The waveguide 4 also comprises transmission zones 11 without any reflective facets 10. The transmission zones 11 extend in between the spaced apart reflective facets 10 and around the reflective facets. In particular, the transmission zones 11 are configured to transmit light from a wearer's environment in the field of view of the wearer 3.

The ophthalmic device 2 comprises a front lens 7, also called herein 'optical article', having a front surface 16 and a back surface 17. The front surface 16 of the front lens forms the front surface of the ophthalmic device 2. The front face 6 of the waveguide 4 is arranged on at least a part of the back surface of the optical article 7. In particular, the back surface 17 of the front lens faces the spaced apart reflective facets 10 and the transmission zones 11.

The front lens 7 comprises a front lens substrate 9. Moreover, the front surface 16 of the front lens comprises a multilayer interference coating 14 as detailed below. Preferably, the multilayer interference coating extends over the whole surface area of the front surface 16 of the front lens.

### B.1 Multilayer interference coating (IC)

The structure of the multilayer interference coating according to the present disclosure will be described hereafter.

The multilayer interference coating 14 comprises a stack of dielectric layers.

The stack of dielectric layers is preferably a stack of alternating high index layers and low index layers.

According to an aspect of the present disclosure, the multilayer interference coating 14 comprises at least two layers having a low refractive index which is lower than 1.55, defined as "LI layer", and at least two layers having a high refractive index which is equal to or higher than 1.55, defined as "HI layer". It is here a simple stack, since the layer total number in the interference coating is higher than or equal to 4 and in general lower than or equal to 16.

According to another aspect of the present disclosure, the total number of HI and LI layers in the AR coating is higher than or equal to 5, preferably higher than or equal to 6, more preferably higher than or equal to 7 and typically higher than or equal to 8.

According to another aspect of the present disclosure, the total number of HI and LI layers in the AR coating is lower than or equal to 16, especially lower than or equal to 15, preferably lower than or equal to 14, more preferably lower than or equal to 13, and typically lower than or equal to 12, such as lower than or equal to 11.

For instance, the total number of HI and LI layers in the AR coating ranges from 8 to 12 layers, preferably from 8 to 11.

HI layers and LI layers don't need to alternate with each other in the stack, although they also may. Two HI layers (or more) may be deposited onto each other, as well as two LI layers (or more) may be deposited onto each other. In the present application, when two HI layers (or more) are deposited onto each other, they are not considered as being a single HI layer when counting the number of layers of the IC stack. The same applies to stacks of two or more adjacent LI layers.

In general, the HI layers and LI layers alternate with each other in the stack of the AR coating according to the invention.

In general, the HI layers are conventional high-refractive-index layers, well known in the art. They generally contain one or more mineral oxides or nitrides such as, in a non-limiting manner, silicon nitrides (SiN or Si₃N₄), zirconia (ZrO₂), titanium oxide (TiO₂), hafnium oxide (HfO₂), alumina (Al₂O₃), scandium oxide (Sc₂O₃), trititanium pentoxide (Ti₃O₅), tantalum pentoxide (Ta₂O₅), neodymium pentoxide (Nd₂O₅), praseodymium oxide (Pr₂O₃), praseodymium titanate (PrTiO₃), lanthanum titanate (LaTiO₃), lanthanum oxide (La₂O₃), cerium oxide (CeO₃), dysprosium pentoxide (Dy₂O₅), niobium pentoxide (Nb₂O₅), or ytterbium oxide (Y₂O₃). Optionally the high-index layers may also contain silicon dioxide (SiO₂) also known as silica, or other low-refractive-index materials, provided that their refractive index is higher than 1.55 as indicated above.

Preferably, the one or more HI layers are made of zirconia (ZrO₂) and/or tantalum pentoxide (Ta₂O₅).

The LI layers are also well-known low-refractive-index layers and may comprise, in a non-limiting manner: silicon dioxide (SiO₂), or else a mixture of silica and alumina, in particular silica doped with alumina. Each LI layer is preferably a layer comprising at least 80% by weight silica and better still at least 90% by weight silica, relative to the total weight of the layer, and even better still consists of a silica layer.

Optionally, the low-index layers may also contain high-refractive-index materials, provided that the refractive index of the resulting layer is lower than 1.55.

When a LI layer comprising a mixture of silica (SiO₂) and alumina (Al₂O₃) is used, it preferably comprises from 1% to 10% by weight, better still from 1% to 8% by weight and even better still from 1% to 5% by weight of alumina (Al₂O₃), with respect to the total weight of silica and alumina in this layer.

For example, silica (SiO₂) doped with 4% or less alumina (Al₂O₃) by weight, or silica doped with 8% alumina may be employed. Commercially available mixtures of silica and alumina may be used, such as the LIMA^{®} mixture sold by Umicore Materials AG (refractive index comprised between n = 1.48-1.50 to 550 nm) or the substance L5^{®} sold by Merck KGaA (refractive index n = 1.48 to 500 nm).

The outermost layer of the multilayer interference coating is in general a layer based on silica, preferably comprising at least 80% by weight silica and better still at least 90% by weight silica (for example a layer of silica doped with alumina) relative to the total weight of the layer, and even better still consists of a silica layer.

The front lens or optical article 7 of the present disclosure may be made antistatic, i.e., such as to not retain and/or develop an appreciable electrostatic charge, by virtue of the incorporation of at least one electrically conductive layer into the stack present on the front surface of the optical article.

This electrically conductive layer is preferably located between two layers of the multilayer interference coating 14 and/or is adjacent to a high-refractive-index layer of this multilayer interference coating 14. Preferably, the electrically conductive layer is located immediately under a low-refractive-index layer of the multilayer interference coating 14, and ideally forms the penultimate layer of the multilayer interference coating 14, i.e. it is located immediately under the silica-based external layer of the multilayer interference coating 14.

The electrically conductive layer must be sufficiently thin not to alter the neutral transmission of the multilayer interference coating at low angle of incidence. The electrically conductive layer is preferably made from an electrically conductive and highly transparent material, generally an optionally doped metal oxide. In this case, its thickness preferably ranges from 1 nm to 15 nm and more preferably from 1 nm to 10 nm. The electrically conductive layer preferably comprises an optionally doped metal oxide chosen from indium oxide, tin oxide, zinc oxide and their mixtures. Indium tin oxide or ITO (i.e. tin-doped indium oxide, In₂O₃:Sn), aluminum-doped zinc oxide (ZnO:Al), indium oxide (In₂O₃), and tin oxide (SnO₂) are preferred. According to one optimal embodiment, the electrically conductive and optically transparent layer is a layer of indium tin oxide (ITO) or a layer of tin oxide.

Generally, the electrically conductive layer contributes, within the stack, but to a limited extent, because of its small thickness, to the obtainment of antireflection properties at high angle of incidence and forms a high-refractive-index layer in the multilayer interference coating. This is the case for layers made from an electrically conductive and highly transparent material such as layers of ITO.

According to the present disclosure, the total thickness of the stack of dielectric layers, that is of the multilayer interference coating 14, is lower than or equal to 450 nm, and preferably lower than or equal to 400 nm. This total thickness of the stack of dielectric layers does include the thickness of an optional electrically conductive layer as described above when present.

As used herein, "a thickness lower than or equal to 450 nm" includes the following values (in nm) and/or any intervals comprised between these values (limits included): 450; 440; 420; 400; 375; 350; 325; 300; 275; 250; 250; 225; 200; 175; 150; 100, etc.

According to a particular aspect of the present disclosure, the thickness of each dielectric layer is preferably of the order of a few nanometers (nm), for example ranging from 1 nm to 250 nm, and preferably lower than or equal to 150 nm, more preferably lower than 120 nm, even more preferably lower than 110 nm.

As used herein, "a thickness lower than or equal to 250 nm" includes the following values (in nm) and/or any intervals comprised between these values (limits included): 250; 240; 230; 220 ; 210; 200; 190; 180; 170; 160; 150; 140; 130; 120; 110; 100; 90; 80; 70; 60; 50; 40; 30; 20; 10; 5, etc.

As detailed below, the multilayer interference coating 14 according to the present disclosure enables to act as a reflective or mirroring coating, for high angle of incidence light beams while having a low reflection coefficient and a neutral transmission for low angle of incidence light beams.

### B.2 Sub-layer

The substrate of the optical article 7 may be coated with one or more functional coatings, also named "underlayer" or "sub-layer", prior to depositing the interferential coating IC of the present disclosure. These functional coatings traditionally used in optics may be, without limitation, an impact-resistant primer layer, an abrasion-resistant coating (that is different from the claimed external abrasion-resistant coating), a polarizing coating, a photochromic coating or a tinted coating. In the following a substrate means either a bare substrate or such a coated substrate.

In one embodiment of the present invention, the multilayer interference coating IC may be deposited (generally directly) onto a sub-layer (i.e.: the sub-layer is positioned between the substrate and the interferential coating). It should be noted that such sub-layer does not belong to the multilayer interference coating IC.The expression " a sub-layer " is understood to mean a coating of relatively large thickness used with the aim of improving mechanical properties such as the resistance of said coating to abrasion and/or scratches and/or to promote its adhesion to the substrate or to the subjacent coating.

On account of its relatively large thickness, the underlayer generally does not participate in the interference optical activity, in particular in the case where it possesses a refractive index similar to that of the underlying coating (which is generally an anti-abrasion and anti-scratch coating) or that of the substrate when the underlayer is deposited directly on the substrate. Therefore, the underlayer, when it is present, is not considered to form part of the reflecting properties of the multilayer interference coating IC.

The underlayer must be thick enough to increase the resistance of the IC to abrasion, but preferably not too thick in order not to absorb light as, depending on the nature of the underlayer, this could significantly alter the neutral transmission at low angle of incidence. Its thickness is generally smaller than 300 nm and better still 200 nm and is generally larger than 90 nm and better still 100 nm.

The underlayer preferably comprises a layer based on silica (SiO₂), this layer preferably comprising at least 80% by weight silica and better still at least 90% by weight silica relative to the total weight of the layer, and even better still this layer consists of a silica layer. The thickness of this silica-based layer is generally smaller than 300 nm and better still 200 nm and is generally larger than 90 nm and better still 100 nm. According to another embodiment, this SiO₂-based layer is a layer of silica doped with alumina, in proportions such as defined above, and preferably consists of a layer of silica doped with alumina. According to one particular embodiment, the underlayer consists of a layer of SiO₂. It is preferable for the underlayer to be a monolayer. However, the underlayer may be laminated (multilayer), in particular when the underlayer and the underlying coating (or the substrate if the underlayer is deposited directly on the substrate) have a non-negligible refractive index difference.

### B.3 Process

The various layers of the multilayer interference coating and the above-mentioned sublayer are preferably deposited by vapor phase deposition, under vacuum, in a vacuum deposition chamber, according to any of the following methods: i) by evaporation, optionally under ion beam assistance; ii) by ion-beam spraying; iii) by cathode sputtering; iv) by plasma-assisted chemical vapor deposition. These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

### B.4 Other functional layers

In some applications, it is preferred that the front surface of the substrate 9 of the front lens 7 be coated with one or more functional coatings improving its optical and/or mechanical properties, prior to depositing the multilayer interferential coating of the present disclosure.

These functional coatings traditionally used in optics may be, without limitation, an impact-resistant primer layer, an internal abrasion-resistant coating (also named hard coat), an antistatic coating especially on the concave face of the optical article, or a stack made of two or more of such coatings. Preferably, the ophthalmic lens comprises no photochromic coating and/or comprises no photochromic substrate.

In general, an optical article such as an ophthalmic lens according to the present disclosure comprises a substrate coated in succession on its front face with an anti-shock primer layer, with an anti-abrasion and/or anti-scratch layer, with the multilayer interferential coating IC according to the present disclosure, and with a hydrophobic and/or oleophobic coating. The optical article according to the present disclosure is preferably an ophthalmic lens for an augmented reality eyewear system. The lens may be a polarized lens, a photochromic lens, or a tinted sunglass lens, optionally providing a correction.

In addition, the back face of the optical article may be coated in succession with an anti-shock primer layer, with an anti-abrasion and/or anti-scratch layer, and with a hydrophobic and/or oleophobic coating.

### B.41 The abrasion-resistant and/or to scratch-resistant coatings

The abrasion-resistant and/or to scratch-resistant (or anti-scratch ) coatings are preferably hard coatings based on poly(meth)acrylates or on silanes generally comprising one or more mineral fillers intended to increase the hardness and/or the refractive index of the coating once cured.

Hard anti-abrasion and/or anti-scratch coatings are preferably prepared from compositions comprising at least one alkoxysilane and/or a hydrolyzate of the latter, for example obtained by hydrolysis with a hydrochloric acid solution and optionally condensation and/or curing catalysts.

Mention may be made, among the coatings recommended in the present invention, of coatings based on epoxysilane hydrolyzates, such as those described in the patents FR 2702486 (EP 0614957), US 4 211 823 and US 5 015 523.

A preferred composition for an anti-abrasion and/or anti-scratch coating is that disclosed in the patent FR 2 702 486 on behalf of the applicant. It comprises an epoxytrialkoxysilane and dialkyldialkoxysilane hydrolyzate, colloidal silica and a catalytic amount of aluminum-based curing catalyst, such as aluminum acetylacetonate, the remainder being essentially composed of solvents conventionally used for the formulation of such compositions. Preferably, the hydrolyzate used is a hydrolyzate of y-glycidoxypropyltrimethoxysilane (GLYMO) and dimethyldiethoxysilane (DMDES).

The anti-abrasion and/or anti-scratch coating composition may be deposited on the main face of the substrate by dip coating or spin coating. It is subsequently cured by the appropriate route (preferably thermal or UV).

The thickness of the anti-abrasion and/or anti-scratch coating generally varies from 2 to 10 µm, preferably from 3 to 5 µm.

### B.42 Primer coating

It is possible, prior to the deposition of the anti-abrasion and/or anti-scratch coating, to deposit, on the substrate, a primer coating which improves the impact resistance and/or the adhesion of the subsequent layers in the final product. This coating can be any impact-resistant primer layer conventionally used for articles made of transparent polymeric material, such as ophthalmic lenses.

Mention may be made, among preferred primer compositions, of compositions based on thermoplastic polyurethanes, such as those described in the Japanese patents JP 63-141001 and JP 63-87223, poly(meth)acrylic primer compositions, such as those described in the patent US 5 015 523, compositions based on thermosetting polyurethanes, such as those described in the patent EP 0 404 111, and compositions based on poly(meth)acrylic latexes or on latexes of polyurethane type, such as those described in the patents US 5 316 791 and EP 0 680 492.

Preferred primer compositions are polyurethane-based compositions and latex-based compositions, in particular polyurethane latexes optionally containing polyester units.

Among commercially available primer compositions suitable for the invention, mention may be made of the following: Witcobond(R) 232, Witcobond(R) 234, Witcobond(R) 240, Witcobond(R) 242, Neorez(R) R- 962, Neorez(R) R-972, Neorez(R) R-986 and Neorez(R) R-9603.

It is also possible to use in the primer compositions blends of these latexes, in particular of polyurethane latex and poly(meth)acrylic latex.

These primer compositions may be deposited on the faces of the article by dip coating or spin coating then dried at a temperature of at least 70°C and possibly of as a high as 100°C and preferably of about 90°C, for a time of 2 minutes to 2 hours and generally of about 15 minutes, in order to form primer layers having thicknesses, post-bake, of 0.2 to 2.5 µm and preferably from 0.5 to 1.5 µm.

### B.43 Hydrophobic coatings and/or oleophobic coatings

The optical article according to the present disclosure may also comprise coatings, formed on the UV-reflecting interference coating and capable of modifying its surface properties, such as hydrophobic coatings and/or oleophobic coatings (anti-smudge top coat). These coatings are preferably deposited on the external layer of the multilayer interference coating. They are generally less than or equal to 10 nm in thickness, preferably from 1 to 10 nm in thickness and better still from 1 to 5 nm in thickness.

Hydrophobic coatings are generally based on fluorosilane or fluorosilazane coatings. They may be obtained by depositing a fluorosilane or fluorosilazane precursor preferably comprising at least two hydrolysable groups per molecule. The fluorosilane precursors preferably contain fluoropolyether groups and better still perfluoropolyether groups. These fluorosilanes are well known and are described, inter alia in patents US 5,081,192, US 5,763,061, US 6,183, 872, US 5,739, 639, US 5,922,787, US 6,337,235, US 6,277,485 and EP 0933377.

One preferred hydrophobic and/or oleophobic coating composition is sold by Shin-Etsu Chemical under the denomination KP 801 M(R). Another preferred hydrophobic and/or oleophobic coating composition is sold by Daikin Industries under the denomination OPTOOL DSX(R). It is a question of a fluororesin comprising perfluoropropylene groups.

### B.5 Optical characteristics of the optical article and/or eyewear system of the present disclosure

The Applicant developed a multilayer interference coating, IC, having a mean visible light reflection factor Rv that is a function of an angle of incidence (AOI) of each optical beam on the front surface. More precisely, the mean visible light reflection factor Rv is lower than or equal to 2.5% for incident optical beams on the front surface over a range of angle of incidence with respect to a perpendicular to said front surface higher than or equal to 0 degrees and lower than or equal to 15 degrees, in absolute value, and the mean visible light reflection factor is higher than or equal to 7.1% for incident optical beams on the front surface at an angle of incidence equal to 45 degrees, in absolute value, with respect to a perpendicular to said front surface.

As a result, the optical article 2 and the eyewear system 1 with such a multilayer interference coating 14, IC, on its front surface 16, present a mean reflection factor Rv, over the visible spectrum, between 380 nm et 780 nm, that is low for incident optical beams on the front surface at low angle of incidence, ranging from 0 degrees to 15 degrees, with respect to a perpendicular to said front surface. For example, figure 1 shows a light beam 31 having an angle of incidence lower than 15 degrees. This light beam 31 is reflected by at most 2.5% in the visible range and transmitted through the multilayer interference coating, IC, with a mean transmission factor Tv of more than 97.5 % in the visible range. The low luminous reflectance Rv at normal incidence provides a clear vision for the wearer of the optical article under normal incidence, and preferably up to an AOI of +/- 15 degrees, still preferably of +/- 17 degrees and even still preferably of +/- 20 degrees. In contrast, the light beam 32, respectively 33, has an angle of incidence of about 35 degrees, respectively 45 degrees. In particular, the light beam 33 at 45 deg. AOI is reflected by more than 7.1% in the visible range and transmitted through the multilayer interference coating, IC, with a mean transmission factor Tv of less than 92.9 % in the visible range. This mean visible light reflection factor Rv of more than 7.1% provides a masking effect for an observer viewing the front side with the IC under an angle of incidence of 45 deg., for example over the range from 40 deg. to 50 deg. As concerns the light beam 32 at 35 deg. AOI, it is reflected by a value preferably around 4% .

More precisely, the inventors have developed the multilayer interference coating with a relatively high ratio between the mean visible light reflection factor Rv at the angle of incidence of 45 degrees and the mean visible light reflection factor Rv at the angle of incidence of 15 degrees, and denoted Rv(45°)/Rv(15°). For example, this ratio is higher than or equal to 2.80, preferably higher than 3.00, and even more preferably higher than 3.50, even more preferably higher than 4.00 .

Indeed, in contrast, prior art antireflective coatings generally have a mean visible light reflection factor Rv as a function of the incidence angle that is stable from normal incidence until 45° or more. For example, a prior art antireflective (AR) coating with a mean visible light reflection factor of about 1.5% for incident optical beams on the front surface over a range of angle of incidence with respect to a perpendicular to said front surface higher than or equal to 0 degrees and lower than or equal to 15 degrees, has a mean visible light reflection factor of about 2% at an angle of incidence of about 45 degrees, and reaches a Rv of about 7% at an angle of incidence of more than 60 degrees. Thus, antireflective coating prior art (see comparative example 2) may generally have a ratio Rv(45°)/Rv(15°) below 2.5 (2.2 for comparative example 2) . Indeed, a rise in the mean visible light reflection factor of such prior art antireflective coatings as a function of the AOI is mostly an inconvenience for AR designers who try to minimize this behavior so that the antireflective coating has similar antireflective properties over the broadest possible range of angle of incidence.

The ICs of the present disclosure, with a higher ratio Rv(45°)/Rv(15°) than common AR coatings, may present an orange residual color in reflection, because they have a bump in the red/NIR spectral range at 15° which shifts to the visible range to increase Rv (see figure 4 for example). However, this orange residual color in reflection may correspond to a blue-tinted transmission color. Blue residual color in transmission, which can be represented by a negative b* value in CIELAB color space is non esthetic because it causes a sickly look for the wearer. It may also alter the color of the environment perceived by the wearer, decreasing visual comfort.

The multilayer interference coating according to the present disclosure provides ranges and thresholds for Rv(15°), Rv(45°) and b* value that enable providing different optical characteristics as a function of the AOI of the incoming light beams while providing a clear and neutral vision for the wearer.

More precisely, the multilayer interference coating has in transmission a color coordinate value b* in CIELAB color space higher than or equal to - 4, more preferably higher than or equal to - 3, even more preferably higher than or equal to - 2, even more preferably higher than or equal to - 1, over a range of angle of incidence lower than or equal to 30 degrees, more preferably lower than or equal to 45 degrees. Advantageously, the color coordinate value b* in CIELAB color space is lower than or equal to + 1, and preferably lower than or equal to 0. This range of b* values enables the front lens 7 to appear in transmission as clear and neutral as possible. It is mostly important to meet this criterion at low angle of incidence in particular at AOI of 0°, 15° and 30°. Indeed, at high incidence, the reflection can mask the residual blue color from observers. Also, the wearer uses lower incidence angle for typical observation. Maintaining b* higher than or equal to - 4 up to an AOI of 45° guarantees the front lens 7 does not look too blue in transmission. Preferably, the value of b* is maintained close to 0 at any angle of incidence, for example from 0 deg. to 45 deg., while maintaining the Rv values up to 15 deg. and at 45 deg as disclosed above.

Moreover, the color coordinate value b* in transmission in CIELAB color space higher being than or equal to - 4 over a range of angle of incidence lower than or equal to 30 degrees, the light beam 31 transmitted through the IC 14 has a neutral color. In other words, the optical article 2 and the eyewear system 1 with such a multilayer interference coating, IC, does not change the color of the image of the environment surrounding the wearer 3.

As a result, the optical article with the multilayer interference coating is antireflective up to an AOI of about 15 degrees, which guarantees a high transmission and clear, neutral and contrasted view for the wearer over a field of view of +/-15 deg, and while providing a masking effect for an observer at an AOI of about 45 degrees.

Furthermore, the multilayer interference coating of the present disclosure has a total thickness lower than or equal to 450 nm and preferably lower than or equal to 400 nm. The total thickness of the multilayer interference coating does not take into account any optional sub-layer, nor other functional layers such as an electrically conductive layer incorporated into the IC stack, an impact-resistant primer layer and/or an abrasion-resistant coating and/or a to scratch-resistant coating. The limited total thickness of the IC renders the production of the optical article according to the present disclosure more easily compatible with industrial processes.

The low mean visible light reflection factor Rv, i.e. lower than or equal to 2.5% for incident optical beams on the front surface over a range of angle of incidence with respect to a perpendicular to said front surface higher than or equal to 0 degrees and lower than or equal to 15 degrees, provides a large field of view to the wearer. The wearer equipped with the eyewear system with the IC of the present disclosure, has a field of view of at least +/-15 degrees, for example of +/- 17 deg. as illustrated in figure 3. Figure 3 is a top view showing the horizontal extension of the field of view on both sides of the sagittal plane of the wearer 3. Of course, the vertical extension of the field of view is also of at least +/-15degrees, for example of +/- 17 degrees.

This field of view +/- 15degrees is dedicated to central vision and is important for observing details or reading for example. The antireflection property of the multilayer interference coating enables the wearer to have a better central vision of the information projected by the augmented reality eyewear system 1 through the waveguide 4.

The multilayer interference coating allows, at least from the observer's point of view to hide any unwanted optic patterns, such as dark lines or stripes 23 around the wearer's eyes, thus resulting in a homogenous appearance, in addition to improve, or at least without hindering, the vision of the wearer 3 of both a projected virtual image that is projected by the augmented reality eyewear system 1 through the waveguide 4, and real image of the environment (including natural environment and digital screens).

Therefore, the ophthalmic device 2 of the disclosure can equip an augmented reality eyewear system 1 so that it is convenient both for the observer and the wearer 3.

It should be noted more generally that the present disclosure is not limited to the examples described and represented.

### Examples

### A) Characterization

Optical and colorimetric measurements (in reflection) of the surface of the base element (i.e.: substrate) coated on its front surface with the exemplified interferential multilayered coatings (front face) : mean reflection factors Rv as a function of the AOI, in particular Rv(15°), Rv(35°), Rv(45°), hue angle h, and respectively in transmission for the residual color as measured by b* value in the international colorimetric CIE (L*, a*, b*) space were carried out with a spectrophotometer, taking into account the standard illuminant D65, and the standard observer 10° (for h and b*). The spectral reflectance and mean reflection factors are provided for an angle of incidence of 15°, 35°, and respectively 45° for forward reflection.

We present two examples, denoted respectively EX1 and EX2, of interferential multilayered coatings according to the present disclosure, and comparative examples according to the prior art.

The ophthalmic lenses employed in the examples EX1 and EX2 comprise an ESSILOR ORMA^{®} lens substrate 9 of 65 mm diameter, of refractive index of 1.50, of -2.00 diopter power and of 1.2 mm thickness, coated on its front and back surfaces with the anti-abrasion and anti-scratch coating (hard coat) disclosed in example 3 of patent EP 0614957 (of refractive index equal to 1.47 and of 3.5 µm thickness), based on a hydrolyzate of GLYMO and DMDES, colloidal silica and aluminum acetylacetonate, then a multilayer interference coating according to the present disclosure.

Said anti-abrasion and anti-scratch coating (defined as HC 1.5) was obtained by deposition and curing of a composition comprising, by weight, 224 parts of GLYMO, 80.5 parts of 0.1N HCl, 120 parts of DMDES, 718 parts of 30% by weight colloidal silica in methanol, 15 parts aluminum acetylacetonate and 44 parts of ethyl cellosolve. The composition also comprises 0.1% of FLUORADTM FC-430(R) surfactant from 3M, by weight relative to the total weight of the composition.

The hard coat HC2 of comparative example "1c" further includes a primer coating in addition to the anti-abrasion and anti-scratch coating or hard coat.

More precisely in that case, the primer coating has a refractive index of 1.6 is formed from a coating composition having a dry extract weight of 20 % and containing a polyurethane latex (U5200 from Alberdingk Boley), a ZrO2 based colloid (SZR-CW from Sakai Chemical Industry), deionized water and Coatosil 77 as a surfactant. The hard coat of refractive index around 1.6 is obtained by curing a composition comprising a hydrolyzate of glycol(gamma glycidoxypropyl trimethoxysilane), a composite colloid of TiO2/ ZrO2 /SiO2 (TiO₂ being a major component). The hard coat thickness is 2.6 micrometers.

The hard coat HC3 of comparative example "1a" is formed from a coating composition as disclosed in EP0614957, example 3.

### B) Tested lenses and results

The table 1 below illustrates the structure of a first exemplary lens, denoted EX1, according to the present disclosure.

The lens EX1 has a standard SiO₂ outermost layer. In this example, the lens comprises an electrically conductive layer located immediately under the outermost layer of the multilayer interference coating 14, and forming the penultimate layer of the multilayer interference coating 14, i.e. it is located immediately under the silica-based external layer of the multilayer interference coating 14. The electrically conductive layer is here made of a tin-doped indium oxide or ITO layer. However, the extremely small thickness (5.5 nm) of this ITO layer does not affect the optical properties of the IC coating 14.

**Table 1: Structure of a first example of IC coating**

| | **EX1** | | |
|---|---|---|---|
| | Material | Refractive index | Thickness (nm.) |
| | **Air** | 1.00 | |
| 9 | **SiO₂** | 1.473 | 97.1 |
| 8 | **ITO** | 1.996 | 5.5 |
| 7 | **ZrO₂** | 1.973 | 15.8 |
| 6 | **SiO₂** | 1.473 | 142.5 |
| 5 | **ZrO₂** | 1.973 | 11.5 |
| 4 | **SiO₂** | 1.473 | 16.3 |
| 3 | **ZrO₂** | 1.973 | 71.2 |
| 2 | **SiO₂** | 1.473 | 14.9 |
| 1 | **ZrO₂** | 1.973 | 15.0 |
| Sub. | **Substrate + HC 1.5 (front face)** | 1.480 | |

The multilayer interferential coating 14 of the lens EX1 includes 8 layers, alternating HI and LI layers, and has a total thickness of 384.3 nm, i.e. without counting the thickness of the ITO layer.

The table 2 below illustrates the structure of a second exemplary lens, denoted EX2, according to the present disclosure. The lens EX2 also has a standard SiO₂ outermost layer. In this example, the lens EX2 also comprises an electrically conductive layer located immediately under the outermost layer of the multilayer interference coating 14. The electrically conductive layer is here made of a tin oxide layer. However, the extremely small thickness (6.5 nm) of this tin oxide layer does not affect the optical properties of the IC coating 14.

**Table 2: Structure of a second example of IC coating**

| | **EX2** | | |
|---|---|---|---|
| | Material | Refractive index | Thickness (nm.) |
| | **Air** | 1.00 | |
| 9 | **SiO₂** | 1.473 | 81.5 |
| 8 | **SnO₂** | 1.843 | 6.5 |
| 7 | **Ta₂Oₛ** | 2.106 | 40.9 |
| 6 | **SiO₂** | 1.473 | 69.4 |
| 5 | **Ta₂Oₛ** | 2.106 | 10.0 |
| 4 | **SiO₂** | 1.473 | 60.7 |
| 3 | **Ta₂Oₛ** | 2.106 | 96.6 |
| 2 | **SiO₂** | 1.473 | 10.9 |
| 1 | **Ta₂Oₛ** | 2.106 | 10 |
| Sub. | **Substrate + HC 1.5 (front face)** | 1.480 | |

The multilayer interferential coating 14 of the lens EX2 also includes 8 layers, alternating HI and LI layers, and has a total thickness of 383.6 nm, i.e. without counting the thickness of the tin oxide layer.

The table 3 below illustrates the structure of a first comparative lens, denoted comparative example 1c, according to the prior art. The lens 1c also has a standard SiO₂ outermost layer.

**Table 3: Structure of a first comparative example antireflective coating**

| | **Comparative example 1c** | | |
|---|---|---|---|
| | Material | Refractive index | Thickness (nm.) |
| | **Air** | 1.00 | |
| 6 | **SiO₂** | 1.474 | 25.3 |
| 5 | **ZrO₂** | 2.004 | 57.66 |
| 4 | **SiO₂** | 1.474 | 42.96 |
| 3 | **ZrO₂** | 2.004 | 27.65 |
| 2 | **SiO₂** | 1.474 | 36.27 |
| 1 | **ZrO₂** | 2.004 | 10 |
| Sub. | **Substrate + HC2 (front face)** | 1.596 | |

The antireflective coating of the comparative example lens 1c includes only 6 layers, alternating HI and LI layers, and has a total thickness of about 200 nm.

The table 4 below illustrates the structure of a second comparative lens, denoted comparative example 2, according to the prior art. The comparative lens 2 also has a standard SiO₂ outermost layer and an electrically conductive layer (ITO layer) located immediately under the outermost layer.

**Table 4: Structure of a second comparative example antireflective coating**

| | **Comparative example 2** | | |
|---|---|---|---|
| | Material | Refractive index | Thickness (nm.) |
| | **Air** | 1.00 | |
| 5 | **SiO₂** | 1.474 | 84.7 |
| 4 | **ITO** | | 6.5 |
| 3 | **ZrO₂** | 2.004 | 68.3 |
| 2 | **SiO₂** | 1.474 | 22.5 |
| 1 | **ZrO₂** | 2.004 | 28.7 |
| Sub. | **Substrate + HC 1.5 (front face)** | 1.483 | |

The antireflective coating of the second comparative example lens includes only 4 layers, alternating HI and LI layers, and has a total thickness of about 204 nm, i.e. without counting the thickness of the ITO layer.

The table 5 below illustrates the structure of a third comparative lens, denoted comparative example 3, according to the prior art. The comparative lens 3 also has a standard SiO₂ outermost layer but no electrically conductive layer (ITO layer).

**Table 5: Structure of a third comparative example antireflective coating 3**

| | |
|---|---|
| SiO2 | 71.9 nm |
| SnO2 | 6.5 nm |
| ZrO2 | 73.4 nm |
| SiO2 | 140.8 nm |
| ZrO2 | 113.3 nm |
| HC | |

The following table 6 shows the optical and colorimetric measurements of the surface of the first exemplary lens EX1 according to the present disclosure: mean reflection factors Rv as a function of the AOI, in particular Rv(15°), Rv(35°), Rv(45°), hue angle h in reflection, and the residual color in transmission as measured by b* value in the international colorimetric CIE (L*, a*, b*) space optical properties.

**Table 6 : optical and colorimetric properties of the EX1 lens**

| AOI (deg.) | Rv % of EX1 | b* in transmission | Hue angle h (deg.) |
|---|---|---|---|
| 0 | 1.42 | -0.4449 | 20.9 |
| 5 | 1.45 | -0.4595 | 21.0 |
| 10 | 1.54 | -0.5073 | 21.4 |
| 15 | 1.73 | -0.6007 | 22.5 |
| 20 | 2.03 | -0.7613 | 24.6 |
| 25 | 2.51 | -1.0206 | 28.0 |
| 30 | 3.20 | -1.4187 | 32.8 |
| 35 | 4.21 | -1.9991 | 38.9 |
| 40 | 5.58 | -2.8002 | 45.8 |
| 45 | 7.39 | -3.8427 | 52.9 |
| 50 | 9.72 | -5.1157 | 59.6 |
| 55 | 12.62 | -6.5617 | 65.8 |
| 60 | 16.20 | -8.0648 | 71.9 |
| 65 | 20.63 | -9.4428 | 78.2 |
| 70 | 26.33 | -10.4486 | 85.1 |
| 75 | 34.16 | -10.7768 | 93.0 |
| 80 | 45.90 | -10.059 | 102.7 |
| 85 | 65.22 | -7.7968 | 116.5 |

From this table 6, it is observed that the first exemplary lens EX1 according to the present disclosure has a mean visible light reflection factor Rv lower than 2.0% for incident optical beams on the front surface over a range of angle of incidence with respect to a perpendicular to said front surface from 0 degrees to 15 degrees. The first exemplary lens EX1 has a mean visible light reflection factor Rv(45°) higher than or equal to 7.1%. In particular, the first exemplary lens EX1 has a ratio Rv(45°)/Rv(15°) equal to about 4.3. Over the range of AOI from 0 deg. to 30 deg., the first exemplary lens EX1 has a b* value in transmission higher than - 2 and lower than 0. Over the range of AOI from 0 deg. to 15 deg., the first exemplary lens EX1 has a b* value in transmission higher than - 1 and lower than 0. Over the range of AOI from 0 deg. to 45 deg. in reflection, the first exemplary lens EX1 has a hue angle h in the range from 20.9 to 52.9.

Figure 4 shows the reflectance curves R(λ) expressed as an absolute reflectance between 0 and 1 (not percentage), as a function of the wavelength λ between 280 nm and 780 nm for the first exemplary multilayer interference coating EX1 respectively at the angle of incidence of 15 degrees (plain line), 35 deg. (dashed line) and 45 deg. (dashed-dotted line). It is observed that the reflectance curve presents a bump in the red/NIR spectral range (about 750 nm) at the low angle of incidence of 15°. This bump shifts to the visible range at the increasing AOI of 35 deg., and even more at the AOI of 45 deg. It is observed that the reflectance curve remains very low in the spectral range from about 400 nm to 550 nm. The reflectance curve is also relatively low in the blue range from 350 nm to 400 nm.

The following table 7 shows the optical and colorimetric values for the first exemplary lens EX1, the second exemplary lens EX2 according to the present disclosure, and respectively a comparative example 1a, the comparative example 1c (structure shown in Table 3) and the comparative example 2 mirror coating (see structure shown in Table 4) : mean reflection factors Rv as a function of the AOI, in particular Rv(15°), Rv(35°), Rv(45°), ratio Rv(45°)/Rv(15°), and b* value in transmission at the AOI of 0 deg., 15 deg., 35 deg. and 45 deg. The comparative example 1a is a hardcoated lens (ORMA+HC3) without thin film coating, presenting an achromatic reflection.

**Table 7 : comparison of the optical and colorimetric properties of various exemplary lenses**

| | EX1 | EX2 | Comp. ex 1a | Comp. ex 1c | Comp. ex. 2 | Comp. ex. 3(AR1) |
|---|---|---|---|---|---|---|
| Rv(15°) | 1.73% | 2.11% | 3.72% | 13.66% | 0.75% | 1.04% |
| Antireflective | yes | yes | no | no | yes | yes |
| Rv(35°) | 4.21% | 4.73% | 4.01% | 13.25% | 1.03% | 2.77% |
| Rv(45°) | 7.39% | 7.94% | 4.7% | 13.56% | 1.65% | 5.31% |
| Masking at 45° | yes | yes | low | yes | no | low |
| Ratio Rv(45°)/Rv(15°) | 4.3 | 3.8 | 1.3 | 0.99 | 2.2 | 1.92 |
| b* (15°) | -0.60 | -0.35 | 0.06 | 2.96 | 0.18 | |
| b* (35°) | -2.00 | -1.85 | 0.06 | 3.04 | 0.36 | |
| b* (45°) | -3.84 | -3.57 | 0.06 | 2.97 | 0.55 | |

The first exemplary lens EX1 and the second exemplary lens EX2 have very low mean reflection factors at the incidence angle of 15 deg. providing a high transmission at low incidence angle with a neutral color, the b* value being comprised between -1.0 and 0. However, the first exemplary lens EX1 and the second exemplary lens EX2 have mean reflection factors at the incidence angle of 45 deg. higher than 7.1% providing a masking effect in reflection. The comparative example 1a has mean reflection factors relatively constant as a function of the AOI, and a low b* value at the AOI of 15deg, 35 deg and 45 deg. which results in achromatic reflection and neutral transmission. However, the comparative example 1a has a mean reflection factor at 45° of only 4.7% which provides an insufficient masking effect in reflection. In contrast, the comparative example 1c has high mean reflection factors both at the AOI of 15 deg. and at the AOI of 45 deg., which provides a masking effect both at low and high incidence angles and which results in poor transmission at low incidence angle, while having high b* values at the AOI of 15deg, 35 deg and 45 deg, which results in blue residual color in transmission. On the other hand, the comparative example 2 has low mean reflection factors both at the AOI of 15 deg. and at the AOI of 45 deg., which results in high transmission but does not provide any masking at the incidence angle of 45 deg, despite the ratio Rv(45°)/Rv(15°) from being higher than 2.0.

The following table 8 shows the optical and colorimetric measurements (in reflection) of the surface of another manufactured exemplary lens EX1 according to the present disclosure compared to the second comparative example 2 mirror coating: mean reflection factors Rv as a function of the AOI, in particular Rv(15°), Rv(35°), Rv(45°), ratio Rv(45°)/Rv(15°), and b* value in transmission at the AOI of 0 deg., 15 deg., 35 deg. and 45 deg.

**Table 8 : comparison of the optical and colorimetric properties of another manufactured exemplary lens EX1 and the comparative example 2**

| | EX1 | Comp. ex. 2 |
|---|---|---|
| Rv(15°) | 1.8% | 0.7% |
| Antireflective | yes | yes |
| Rv(35°) | 4.1% | |
| Rv(45°) | 7.4% | |
| Masking at 45° | yes | no |
| Ratio Rv(45°)/Rv(15°) | 4.1 | |
| b* (15°) | | |
| b* (35°) | | |
| b* (45°) | -0.64 | |

It is observed that the experimental optical and colorimetric measurements of the lenses in Table 7 are in good agreement with the theoretical optical and colorimetric values of Table 6 for the same coatings.

Figure 6 shows the same three lenses 41, 42 and 43, but now seen in reflection at higher angle of incidence on the white background, the AOI ranging from about 35 deg. to 50 deg . The lens 41 with hardcoat only, presents a neutral transmission at such inclined AOI. The lens 42 with the conventional antireflective coating still shows its antireflective property and has a neutral transmission, the color in transmission appearing slightly yellow due to the substrate. The lens 43 with the multilayer interference coating shows reflective property at such higher angle of incidence and has a neutral transmission, i.e. without blue residual color in transmission.

Figure 6 shows the same three lenses 41, 42 and 43, as in figure 5, seen in reflection at the same angle of incidence but now on a black background, the AOI ranging from about 35 deg. to 50 deg. The lens 41 with hardcoat only, presents a medium reflection, slight masking effect of the background, at this inclined AOI. The lens 42 with the conventional antireflective coating still shows its antireflective property and has a neutral transmission, but no masking effect. The lens 43 with the multilayer interference coating shows a high reflective property at high incidence and a good masking effect.

According to a particular and advantageous aspect of the present disclosure, the multilayer interference coating presents a homogeneous color in reflection as a function of the AOI as compared to other multilayer interference coatings. In other words, the variation in the hue angle as a function of the AOI is less than for other multilayer interference coatings.

The following table 9 shows the hue angle (°) variation of the reflected color depending on the angle of incidence respectively for the comparative example 3, and for the first exemplary multilayer interference coating EX1 according to the present disclosurelt is especially important to have a low variation from 0° to 15° to 45° AOI, because this range of AOI is the common observation angular range. For each coating, the value of the hue angle is calculated from commercially available Interferential stack design software such as Essential Macleod and the difference between the hue angle at normal incidence and the hue angle at the current AOI is calculated, denoted 'Delta h'. As seen in Table 9, the conventional antireflective coating presents strong variations of the hue angle (°) of the reflected color as a function of the angle of incidence : the difference in hue angle compared to the hue value at normal incidence is about 10 at the AOI of 15 degrees, about 37 at the AOI of 30 degrees, and about 56 at the AOI of 40 degrees. In comparison, the multilayer interference coating EX1 enables to maintain a lower difference of hue angle as a function of the AOI : the difference in hue angle compared to the hue angle at normal incidence is about 1.6 at the AOI of 15 degrees, about 12 at the AOI of 30 degrees, and about 25 at the AOI of 40 degrees.

**Table 9 : variation in hue angle as a function of incidence angle for a conventional AR coating and for the EX1 lens**

| | AR1 | | EX 1 | |
|---|---|---|---|---|
| Incidence angle | h° | Delta h° (from 0°) | h° | Delta h° (from 0°) |
| 0 | -20.0 | 0.0 | 20.9 | 0.0 |
| 5 | -19.0 | 1.0 | 21.0 | 0.1 |
| 10 | -16.1 | 4.0 | 21.4 | 0.5 |
| 15 | -10.9 | 9.1 | 22.5 | 1.6 |
| 20 | -3.5 | 16.5 | 24.6 | 3.7 |
| 25 | 6.0 | 26.0 | 28.0 | 7.1 |
| 30 | 16.8 | 36.8 | 32.8 | 12.0 |
| 35 | 27.3 | 47.3 | 38.9 | 18.1 |
| 40 | 36.2 | 56.2 | 45.8 | 25.0 |
| 45 | 42.8 | 62.8 | 52.9 | 32.0 |
| 50 | 47.2 | 67.3 | 59.6 | 38.7 |
| 55 | 50.5 | 70.5 | 65.8 | 44.9 |
| 60 | 53.3 | 73.3 | 71.9 | 51.0 |
| 65 | 56.3 | 76.3 | 78.2 | 57.3 |
| 70 | 59.8 | 79.8 | 85.1 | 64.2 |
| 75 | 64.1 | 84.1 | 93.0 | 72.1 |
| 80 | 69.3 | 89.3 | 102.7 | 81.9 |
| 85 | 75.3 | 95.3 | 116.5 | 95.6 |

As seen in Table 9, the conventional antireflective coating AR1 presents a strong gradient of variation in reflected color. In comparison, the exemplary multilayer interference coating EX1 according to the present disclosure presents a smaller gradient of variation in reflected color, in particular over the range of incidence angle from 0° to 45°, and especially from 0° to 30°, and even more from 0° to 15°.

The limited variation in reflected color of the multilayer interference coating is an advantage for the aesthetics of optical article 2 the from an observer's point of view. It is especially important to have a low variation in reflected color over the range of AOI from 0° to 15° and preferably to 45°, because such incidence angles are the common observation angular range. As seen in Table 9, the exemplary multilayer interference coating EX1 according to the present disclosure enables to maintain a lower difference of hue angle than the conventional antireflective coating.

The optical article 7 with the multilayer interference coating according to the present disclosure finds application in an optical device 2, or ophthalmic device, configured to equip an augmented reality eyewear system and to an augmented reality eyewear system comprising such an optical device.

## Claims

1. Optical article comprising a front surface adapted to receive incident optical beams and a back surface through which transmitted optical beams exit to reach an eye of an individual, wherein the front surface comprises a multilayer interference coating comprising a stack of dielectric layers, the multilayer interference coating providing the optical article with a mean visible light reflection factor Rv that is a function of an angle of incidence of each optical beam on the front surface, said optical article being designed such that:
- the multilayer interference coating has a total thickness lower than or equal to 450 nm;
- the mean visible light reflection factor Rv being lower than or equal to 2.5% for incident optical beams on the front surface over a range of angle of incidence with respect to a perpendicular to said front surface higher than or equal to 0 degrees and lower than or equal to 15 degrees, and
- the mean visible light reflection factor being higher than or equal to 7.1% for incident optical beams on the front surface at an angle of incidence equal to 45 degrees with respect to a perpendicular to said front surface.

2. Optical article according to claim 1 wherein the multilayer interference coating has in transmission a color coordinate value b* in CIELAB color space higher than or equal to - 4, more preferably higher than or equal to - 3, even more preferably higher than or equal to - 2, even more higher than or equal to - 1, over a range of angle of incidence lower than or equal to 30 degrees, more preferably lower than or equal to 45 degrees.

3. Optical article according to claim 1 or 2, wherein the multilayer interference coating has in reflection a hue angle derived from the CIELAB color space for incident optical beams at an angle of incidence of 0 degrees and, respectively of 45 degrees, with respect to a perpendicular to said multilayer interference coating, and wherein a difference between the hue angle at the angle of incidence of 45 degrees and the hue angle at the angle of incidence of 0 degree is lower than or equal to 35 in absolute value.

4. Optical article according to any one of preceding claims, wherein the color coordinate value b* of the transmission of the multilayer interference coating is higher than or equal to - 4 for incident optical beams at an angle of incidence lower than or equal to 50 degrees with respect to a perpendicular to said multilayer interference coating.

5. Optical article according to any one of preceding claims, wherein a ratio between the mean visible light reflection factor Rv at the angle of incidence of 45 degrees and the mean visible light reflection factor Rv at the angle of incidence of 15 degrees (Rv(45°)/Rv(15°)) is higher than or equal to 2.80.

6. Optical article according to any one of preceding claims wherein the multilayer interference coating (14) comprises at least one layer of high refractive index material having a refractive index higher than 1.55 in the visible range and at least one layer of low refractive index material having a refractive index of 1.55 or less in the visible range, each layer of the multilayer interference coating having a thickness lower than or equal to 250 nm, more preferably lower than or equal to 150 nm.

7. Optical article according to claim 6 wherein each layer of the at least one layer of high refractive index material having a refractive index higher than 1.55 in the visible range has a thickness lower than or equal to 150 nm, more preferably lower than 120 nm, even more preferably lower than 110 nm.

8. Optical article according to claim 6 or 7, wherein each layer of the at least one layer of low refractive index material having a refractive index of 1.55 or less in the visible range has a thickness lower than or equal to 150 nm, more preferably lower than 140 nm, even more preferably lower than 90 nm.

9. Optical article according to any one of claims 6 to 8, wherein said multilayer interference coating comprises less than 13 layers, more preferably less than 10 layers, even more preferably less than or equal to 9 layers of layer of high refractive index material having a refractive index higher than 1.55 in the visible range and layer of low refractive index material having a refractive index of 1.55 or less in the visible range.

10. Optical article according to the preceding claim, wherein said multilayer interference coating comprises layers of different materials from an innermost layer to an outermost layer:
a layer of zirconium dioxide having a thickness of 10 nm to 20 nm;
a layer of silicon dioxide having a thickness of 10-20 nm;
a layer of zirconium dioxide having a thickness of 60-80 nm;
a layer of silicon dioxide having a thickness of 10-20 nm;
a layer of zirconium dioxide having a thickness of 5-20 nm;
a layer of silicon dioxide having a thickness of 100-200 nm;
a layer of zirconium dioxide having a thickness of 10-20 nm.

11. Optical article according to any one of claims 1 to 9, wherein said multilayer interference coating comprises layers of different materials from an innermost layer to an outermost layer:
a layer of tantalum pentoxide having a thickness of 5-20 nm;
a layer of silicon dioxide having a thickness of 5-20 nm;
a layer of tantalum pentoxide having a thickness of 80-120 nm;
a layer of silicon dioxide having a thickness of 40-80 nm;
a layer of tantalum pentoxide having a thickness of 5-20 nm;
a layer of silicon dioxide having a thickness of 50-100 nm;
a layer of tantalum pentoxide having a thickness of 20-50 nm.

12. Eyepiece comprising a waveguide (4) and further comprising an optical article (7) having a front surface and a back surface opposite to said front surface, the front face of the waveguide (4) being arranged on a part of the back surface of the optical article (7), wherein the front surface of the optical article (7) comprises a multilayer interference coating comprising a stack of dielectric layers, the multilayer interference coating providing the optical article (7) with a mean visible light reflection factor Rv that is a function of an angle of incidence of each optical beam on the front surface, said optical article being designed such that the multilayer interference coating has a total thickness lower than or equal to 450 nm, the mean visible light reflection factor Rv being lower than or equal to 2.5% for incident optical beams on the front surface of the optical article over a range of angle of incidence with respect to a perpendicular to said front surface higher than or equal to 0 degrees and lower than or equal to 15 degrees, the mean visible light reflection factor being higher than or equal to 7.1% for incident optical beams on the front surface of the optical article at an angle of incidence equal to 45 degrees with respect to a perpendicular to said front surface.

13. Eyepiece (2) according to the preceding claim wherein the multilayer interference coating has in transmission a color coordinate value b* in CIELAB color space higher than or equal to - 4, more preferably higher than or equal to - 3, even more preferably higher than or equal to - 2, even more higher than or equal to - 1, over a range of angle of incidence lower than or equal to 30 degrees, more preferably lower than or equal to 45 degrees.

14. Head-mountable system (1) comprising a projector configured to project a virtual image, and an eyepiece (2) comprising a waveguide (4), the waveguide (4) being configured to transmit projected light emitted by the projector to a field of view of a wearer (3), the eyepiece (2) further comprising an optical article (7) having a front surface and a back surface opposite to said front surface, the front face of the waveguide (4) being arranged on a part of the back surface of the optical article (7), wherein the front surface of the optical article (7) comprises a multilayer interference coating comprising a stack of dielectric layers, the multilayer interference coating providing the optical article (7) with a mean visible light reflection factor Rv that is a function of an angle of incidence of each optical beam on the front surface, said optical article being designed such that the multilayer interference coating has a total thickness lower than or equal to 450 nm, the mean visible light reflection factor Rv being lower than or equal to 2.5% for incident optical beams on the front surface of the optical article over a range of angle of incidence with respect to a perpendicular to said front surface higher than or equal to 0 degrees and lower than or equal to 15 degrees, the mean visible light reflection factor being higher than or equal to 7.1% for incident optical beams on the front surface of the optical article at an angle of incidence equal to 45 degrees with respect to a perpendicular to said front surface, said eyepiece (2) being configured to display projected light emitted by the projector and transmitted by the waveguide to a field of view of the wearer (3).

15. Eyewear system (1) formed by spectacle lenses, or by a helmet comprising a visor, or by a facial mask, the eyewear system comprising at least one projector configured to project a virtual image, and an eyepiece (2) comprising a waveguide (4) being configured to transmit projected light emitted by the projector to a field of view of a wearer (3), the eyepiece (2) further comprising an optical article (7) having a front surface and a back surface opposite to said front surface, the front face of the waveguide (4) being arranged on a part of the back surface of the optical article (7), wherein the front surface of the optical article (7) comprises a multilayer interference coating comprising a stack of dielectric layers, the multilayer interference coating providing the optical article (7) with a mean visible light reflection factor Rv that is a function of an angle of incidence of each optical beam on the front surface, said optical article being designed such that the multilayer interference coating has a total thickness lower than or equal to 450 nm, the mean visible light reflection factor Rv being lower than or equal to 2.5% for incident optical beams on the front surface of the optical article over a range of angle of incidence with respect to a perpendicular to said front surface higher than or equal to 0 degrees and lower than or equal to 15 degrees, the mean visible light reflection factor being higher than or equal to 7.1% for incident optical beams on the front surface of the optical article at an angle of incidence equal to 45 degrees with respect to a perpendicular to said front surface.
